# EUROPEAN PATENT APPLICATION

(11) **EP 4 512 521 A1**
(43) Date of publication of application: **26.02.2025**
(21) Application number: 23193570.1
(22) Date of filing: 25.08.2023
(51) Int. Cl.: B01J 19/12, B01J 19/24

(54) **PHOTO-REACTOR SYSTEM AND PHOTOSYNTHETIC AND PHOTOCATALYTIC REACTION METHOD**

(71) Applicant: Snam S.p.A., 20097 San Donato Milanese (MI) (IT)
(72) Inventor: Agosti, Amedeo, San Donato Milanese (IT); Lualdi, Matteo, San Donato Milanese (IT); Remondini, Davide, San Donato Milanese (IT); Valldeperez Margalef, Pere, San Donato Milanese (IT)
(74) Representative: Novagraaf International SA

(57) **Abstract**

A photoreactor system comprising:
- a first transparent reactor cell comprising a first photocatalyst and
- a second reactor cell comprising a second photocatalyst,

the first transparent reactor cell being configured to receive light from a light source and the second reactor cell being configured to receive light from the light source through the first transparent reactor cell,
wherein the second photocatalyst is adapted to absorb light in a second wavelength range differing from a first wavelength range absorbed by the first photocatalyst.

## Description

### FIELD OF THE INVENTION

The present invention relates to a photo-reactor system and a reaction method.

### BACKGROUND OF THE INVENTION

Photosynthesis and photocatalysis are processes that involve the use of light to activate a catalyst and facilitate endergonic and exergonic, chemical reactions, respectively. It has become an important tool in the production of chemicals as it provides an environmentally friendly alternative to traditional chemical synthesis methods that are often based on thermal-driven approaches fuelled by fossil resources. Photosynthesis and photocatalysis may also allow for greater control over the selectivity and specificity of the chemical reactions, which can result in higher yields and fewer wastes.

The development of photosynthesis and photocatalysis has led to the creation of new processes for the production of chemicals. For instance, photosynthetic water splitting can be used to produce hydrogen, which can be used as a feedstock or as a clean fuel source. Other applications include the photosynthetic reduction of carbon dioxide to produce useful chemicals such as methanol and the photocatalytic degradation of pollutants in air and water.

One of the key advantages of photosynthesis and photocatalysis is that it can be performed using sunlight, which is a free and abundant energy source. However, efficient collection of the entire solar spectrum is essential for the process to be effective. To address this challenge, researchers have developed new materials and structures that can enhance light absorption at different wavelengths and improve the efficiency of photosynthetic and photocatalytic reactions.

To efficiently convert sunlight, a photocatalysis reactor system with stacked reaction cells has been proposed according to US2020/0140293 A1 or WO2019/00577 A1. However, these reactor systems fail to allow a very high solar energy conversion. The resulting photo reactor systems are thus inefficient and bulky, which limit their adaptability to environments such as industrial refineries and building roofs.

### SUMMARY OF THE INVENTION

This objective is accomplished by a photoreactor system comprising:
- a first transparent reactor cell comprising a first photocatalyst and
- a second reactor cell comprising a second photocatalyst,

the first transparent reactor cell being configured to receive light from a light source and the second reactor cell being configured to receive light from the light source through the first transparent reactor cell,
wherein the second photocatalyst is adapted to absorb light in a second wavelength range differing from a first wavelength range absorbed by the first photocatalyst.

Thanks to the specific architecture of the photo-reactor system, an efficient production of light-promoted chemical products can be obtained while limiting the size of the photo-reactor system. The first transparent reactor cell is at least transparent to the second wavelength range.

Advantageously, the first transparent reactor cell is located on the second reactor and arranged for directly receiving light from the light source. Such a staked or concentric arrangement can reduce the footprint of the photo-reactor system to allow an installation in a limited area. The first transparent reactor cell and the second reactor cell may have the same dimensions or the second reactor cell may have greater dimensions.

Advantageously, the second reactor cell is transparent and is embedded in the first transparent reactor cell, preferably coaxially. This allows reducing the overall volume of the photo-reactor system without decreasing efficiency. A second coaxial transparent cell allows optimizing the reacting media circulation and further to optimize the use of an optional other light source embedded in the second transparent reactor cell.

Advantageously, the first photocatalyst and the second photocatalyst differ one from the other and are chosen among metals, metal alloys (such as ZnS, CdS and InP) or organic semiconductors as well as alloys or hetero-structures, which allow efficient photosynthetic and photocatalytic reactions. The first and second photocatalysts may be physically or chemically bonded to the photoreactor, such as to an internal wall of the photo-reactor and/or to an inside element of the photo-reactor, such as an inside support or a chicane.

Advantageously, the first photocatalysis is adapted to catalyse at least one first reaction and the second photocatalyst is adapted to catalyse at least one second reaction. The first reaction may thus differ from the second reaction. For example, the first reaction includes at least one first oxidation half-reaction and at least one first reduction half-reaction. Similarly, the second reaction may include at least one second half-oxidation reaction and at least one second half-reduction reaction. Having different reactions in the first transparent reactor cell and the second reactor cell may allow a better use of the collected light and thus increase the efficiency of the photo reactor system while reducing its size. Without being bound by any theory, this may ensue from the fact that the different wavelengths absorbed in the distinct reaction cells possess different chemical potentials, which in turn can catalyse chemical reactions having an activation energy equal or lower than such chemical potential.

Preferably, none of the first reactions and the second reactions relate to water splitting, since it may lead to a reduced overall efficiency. The first and second reduction half-reactions may relate to fuel production such as hydrogen, methane or ammonia production. The second oxidation half-reaction may relate to oxidation and/or coupling of organic starting material.

Advantageously, the first photocatalyst is adapted to catalyse the production of first products and the second photocatalyst is adapted to catalyse the production of second products. Each of the first products and the second products may include at least one product from the oxidation half-reaction and at least one product from the reduction half-reaction. The reduction half-reaction product is preferably a fuel such as hydrogen, methane or ammonia.

Advantageously, the first photocatalyst and/or the second photocatalyst is a colloidal material suspended in a liquid. The colloidal photocatalyst may thus float in a reaction media and optionally be circulated with the starting materials and products. For example, the photocatalysts may be semiconductor photocatalysts, such as at least one organic semiconductor catalyst and/or at least one non-organic semiconductor catalyst.

Advantageously, the photo reactor system includes one tank for storing the first and second starting materials and connected to both the first transparent reactor cell and the second reactor cell. Consequently, a common reaction media may be provided in the first transparent reactor cell and in the second reactor cell. Similar reactions may be performed in the first transparent reactor cell and in the second reactor cell, for example if the first photocatalyst and the second photocatalyst is of the same chemical composition but with different wavelength ranges of light absorption.

Advantageously, the starting materials (or reagents) of the second reaction may be the products of the first reaction. The photo-reactor system may thus allow performing two steps syntheses obtaining complex organic products.

Advantageously, the photo reactor system includes a first tank connected to the first reactor cell for storing the first starting materials, the first products and/or the first photocatalyst and a second tank connected to the second reactor cell for storing the second starting materials, the second product and/or the second photocatalyst.

Advantageously, the second reactor cell is transparent and the photo reactor system comprises a third reactor cell with a third photocatalyst, the third reactor cell being adapted to receive light through the second reactor cell. For example, the first transparent reactor cell and the second reactor cell may be similar. The photo-reactor system may thus be produced as a stack of three reactor cells or more, as well as three or more concentric tubes. For example, the photo reactor system includes a first row of first transparent reactor cells, a second row of second transparent reactor cells located below the first row and optionally a third row of third reactor cells located below the second row.

Advantageously, the third reactor cell is adapted to absorb light in a third wavelength range different from the first wavelength range and the second wavelength range.

Another aspect of the present disclosure is a method to obtain chemical products, such as fuels and organic products, with a photocatalysis reactor system comprising a first transparent reactor cell including a first photocatalyst and a second reactor cell including a second photocatalyst, wherein the first photocatalyst is adapted to absorb a first wavelength and the second photocatalysts is adapted to absorb a second wavelength, the method comprising the steps of:
- providing first starting materials in the first transparent reactor cell,
- providing second starting materials in the second reactor cell,
- Illuminating the first transparent reactor cell and the second reactor cell through the first transparent reactor cell.

Advantageously, the steps of providing the first starting materials and the second starting materials are performed continuously, wherein the first starting materials are circulated in the first transparent reactor cell and the second starting materials are circulated in the second reactor cell.

Advantageously, a flow rate of the first starting materials and/or of the second starting materials depends on an amount of light received by the photo reactor system, i.e. a flow rate of the first reaction media and/or a flow rate of a second reaction media or a flow rate of a common reaction media.

### BRIEF DESCRIPTION OF THE DRAWINGS

Further advantages and preferred embodiments of the present invention will become apparent from the following detailed description and drawings, in which:
Figure 1 is a schematic view of reactor cells, according to the present disclosure.
Figure 2 is a partial isometric sketch of alternative reactor cells, according to the present disclosure.
Figure 3 is a partial isometric sketch of the reactor cells of Figure 2 realized in a U-shape.
Figure 4 is a detailed schematic view of a photo reactor system including the reactor cells of Fig. 1.

### DETAILED DESCRIPTION

In the present disclosure, "transparent" means the property of letting UV visible and infrared light passing through with no or minimum absorption. For example, a transparent material may be quartz. Photocatalyst means any catalyst that uses light as a chemical potential source to perform catalysis. According to the present disclosure, a photocatalyst may be a redox photocatalyst catalysing a reduction half-reaction and an oxidation half-reaction with light energy.

A light source according to the present disclosure is preferably the sun and the light may thus be AM 1.5G, i.e. the standard radiation at the earth surface. Consequently, the photo-reactor system according to the present disclosure may be located in any sunny area such as on a roof, a greenhouse or in a chemical industrial complex. Alternatively, an artificial light source may also be considered for example in the case of an industrial facility illuminated at night. The artificial light should be composed of infrared, visible light including at least blue light and preferably visible light and/or ultraviolet light.

### REACTOR CELLS

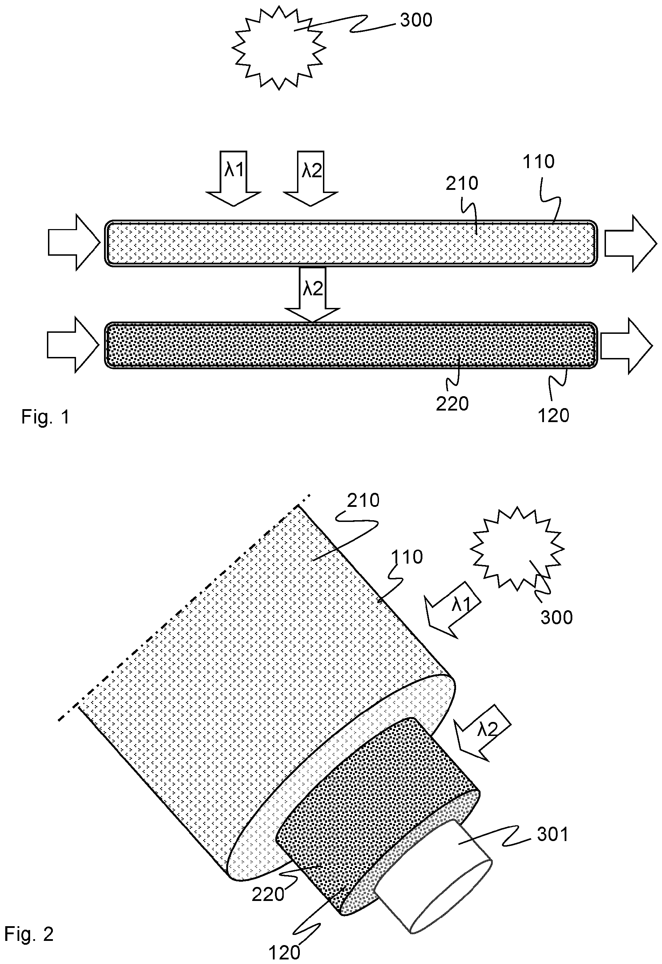

According to Fig. 1, a photoreactor system may include a first transparent reactor cell 110 located on top of a second reactor cell 120 with regard to a light source 300. The first transparent reactor cell 110 includes a first photocatalyst 210 and the second reactor cell includes a second photocatalyst 220.

The first transparent reactor cell 110 includes at least opposite transparent wall facing the light source 300 and the second reactor cell 120 in order to let the light from the light source 300 to reach the second reactor cell 120. Preferably, the first transparent reactor cell 110 includes only transparent walls and may include at least one cylinder or tube, for example with a circular or ellipsoidal basis or alternatively with a square basis. Preferably, the first transparent reactor cell 110 has a longitudinal design, i.e. a length at least ten times and preferably fifty times or one hundred times the diameter or the width. Alternatively or in combination, the first transparent reactor cell may be a panel, i.e. a flat and rectangular closed space such as a rectangular prism or a rectangular cuboid having at least two opposite transparent walls.

The second reactor cell 120 includes at least a transparent wall or a transparent wall portion facing the first transparent reactor cell 110, in order to let the light passing through the first transparent reactor cell 110 to reach the inside of the second reactor cell 120 including the second photocatalyst 220. The second reactor cell 120 may include other or all transparent walls similarly to the first transparent reactor cell 110, or a non-transparent wall having a mirror surface facing the interior of the second reactor cell. The geometry of the second reactor cell 120 may be similar to that of the first transparent reactor cell, i.e. at least one tube or a panel.

The internal arrangement of the first transparent reactor cell 110 and/or the second reactor cell 120 may be linear or may include internal obstacles or chicanes in order to lengthen the light exposure time or dwell time. The first reactor cell 110 and the second reactor cell 120 may be insulated one from the other, in particular electrically insulated.

Fig. 2 shows an alternative embodiment of reactor cells according to the present disclosure, in which part of the first reactor cell 110 and the second reactor cell 120 have been hidden. The second reactor cell 120 is transparent and is embedded or accommodated within the first transparent reactor cell 110, for example coaxially. In another embodiment (not shown), the second transparent reactor cell 120 is in contact and/or fixed to a portion of the internal wall of the first transparent reactor cell 110, for example a portion of the internal wall opposite to the light source 300.

Preferably, another light source 301 may be included within the second reactor cell 120, for example coaxially. The light source may be a white lamp and/or a LED stripe. Alternatively, the other light source 301 may be included in the first transparent reactor cell 300. For example, a photoreactor system comprising the first and second reactor cells 110, 120 according to Fig. 2 may be illuminated by the light source 300 such as the sun during daytime, by the other light source 301 during nighttime and by both the light source 300 and the other light source 301 during dawn and dusk.

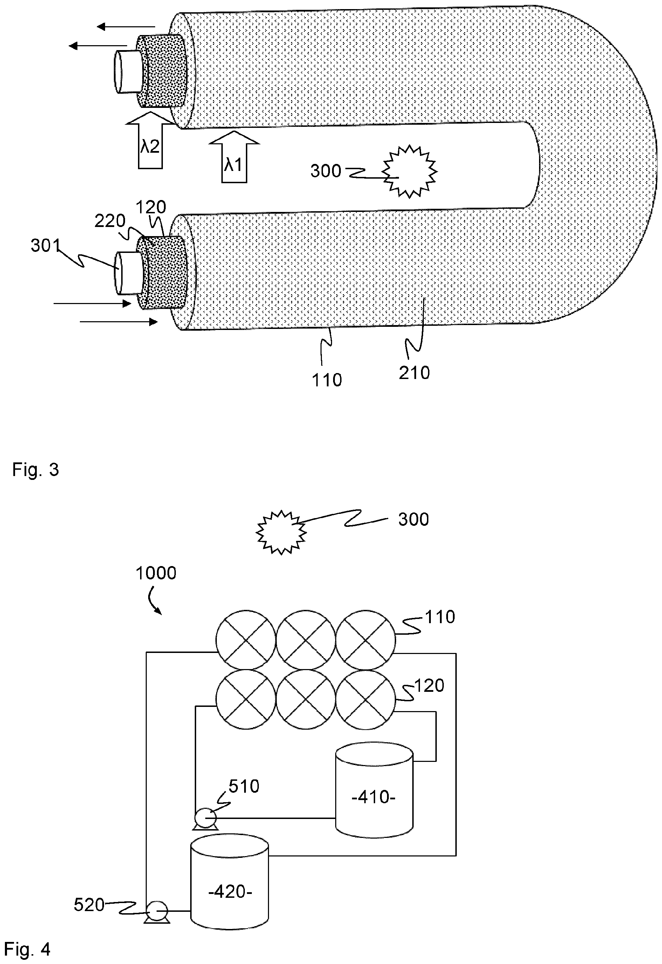

Fig. 3 shows the first and second reactor cells 110, 120 of Fig. 2 realized in a U-shape. For example, the photoreactor system may comprise one U-shaped reactor system or the reactor system may include several U-shaped reactor cells connected together. The first and second reactor cells of Figs. 2 and 3 may be similar to that of Fig. 1 and may have any cross-section and may be electrically insulated one from the other. The reactor cells of Fig. 1 may also be realized in a U-shape. Such a U-shape may increase the collection of light from the light source 300 and/or may improve reaction media circulation.

### SYSTEM

In a photo-reactor system including the reactor cells of Figs. 1-3, the first transparent reactor cell 110 or a portion of the first transparent reactor cell 110 is located between the light source 300 and the second reactor cell 120. The second reactor cell 120 receives light mainly or only through the first transparent reactor cell 110. Preferably, a first row or first floor of several first transparent reactor cells may be provided in a stacked photo-reactor system, for example with parallel and longitudinal first transparent reactor cells and/or with aligned panels. Similarly, a second row or second floor of second reactor cells may be located below the first row.

In a photo-reactor system including the reactor cells of Figs. 2 and 3, wherein the second reactor cell 120 is embedded in the first reactor cell 110, one, two or more rows or floors of first and second reactor cells may be considered in a stacked photo-reactor system.

Photocatalyst may be supplied in the photo-reactor cells in a homogeneous or heterogenous way. Notwithstanding the mixture state and composition, the photocatalyst concentration in the first cell (the top/outer one) may be tuned in order to optimized the absorbance of the corresponding portion of the solar spectrum and minimize the scattering of wavelengths that should be transmitted to the second cell (the bottom/inner one).

With reference to Figs. 1-3, the first photocatalyst 210 and the second photocatalyst 220 are chosen so as to absorb light in two different wavelength ranges λ 1 and λ 2. A small overlap between absorbed wavelength range may be allowed, for example limited to 20% or 10% of one of the wavelength ranges. Preferably, no overlap occurs between the first wavelength range absorbed by the first photocatalyst and the second wavelength range absorbed by the second photocatalyst.

The wavelength range λ1 absorbed by the first photocatalyst 210 may be the shortest wavelength range (i.e. the higher energy light), such as UV light and/or blue light. The first photocatalyst 210 may thus catalyze an oxidation reaction having the highest activation energy, with regard to the second photocatalyst 220.

The first photocatalyst and the second photocatalyst may be fixed in the first reactor cell and the second reactor cell, respectively. Preferably, the first photocatalyst 210 and the second photocatalyst 220 are under the form of colloids and float in the reaction media. The colloidal photocatalysts may be blocked in the first reactor cell and second reactor cell, for example by a grid, a filter or a decanter. Preferably, the colloid photocatalysts may flow with the reaction media, i.e. in the respective reactor cell and through respective tubing, pumping means and tanks.

Alternatively or in combination, the photocatalyst may be physically or chemically bonded to the photo-reactor, such as to an internal wall of the photo-reactor and/or to an inside element of the photo-reactor, such as an inside support or a chicane.

With reference to Fig. 4, a photoreactor reactor system 1000 is shown with a first row of first transparent reactor cells 110 and a second row of second reactor cells 120 according to Fig. 1. Each row may comprise at least two reactor cells and preferably more than two. The second row of second reactor cells 120 is located below the first row of first transparent rector cells 110, the light source 300 being above the first row. A similar photo-reactor system may be obtained with first and second reactor cells 110, 120 according to Figs. 1-2.

The first transparent reactor cells 110 may be connected to one or more first tank 410 and the second reactor cells 120 may be connected to one or more second tanks 420. The circulation of reaction media in the first transparent reactor cells 110 and in the second reactor cells 120 may be provided by respective pumping means 510, 520. Alternatively, the first reactor cell(s) and the second reactor cell(s) may be connected one with the other through tubing to one or more common tank and the circulation of a common reaction media may be performed by a common pumping means (not shown).

Control means may be provided to follow the efficiency of the photosynthetic and photocatalytic reactions, such as temperature control, pH control, flow rate control, pressure control and/or spectroscopic control to evaluate concentrations of starting materials and products. Purification means may be provided in order to extract the product(s) from the reaction media (not shown in Fig. 2). Any purification technique known by the skilled person may be contemplated such as distillation, liquid-liquid purification, chromatography, filtration, perm evaporation and decantation.

Below the second reactor cells 120, a mirror surface (not shown) can be placed in order to reflect light passing through the first transparent reactor cell 110 and the second reactor cell 120 toward the first transparent reactor cell 110 and the second reactor cell 120. Any mirror surface such as a metallic mirror may be considered.

The first reactor cell and/or the second reactor cell of Figs. 1-3 may be provided with heating means, as known in the art. For example, the heating means may be electric resistance provided inside, outside and/or in the walls of the first reactor cell and/or the second reactor cell. The heating means may also include a heat-transfer liquid circulating outside and/or in the walls of the first reactor cell and/or the second reactor cell. The first reactor cell and the second reactor cell may be enclosed in a frame or chassis (not shown). For example, the top of the chassis, facing the light source may be formed mainly or only by the first reactor cells. The heating means may be provided in the frame or chassis. Heating control may also be performed outside of the photo-reactors such as in the tanks or in a fluidly connected heating device.

In addition, the first reactor cell and/or the second reactor cell of Figs. 1-3 may be provided with cooling means, as known in the art. The cooling means include Peltier cells and the circulation of a cooling liquid in or around the walls of the first reactor cell and/or second reactor cell. Cooling control may also be conducted outside of the photo-reactor, such as in the tanks or in a fluidly connected cooling device.

### OPERATIONS

The first transparent reactor cell(s) and the second reactor cell(s) may be operated in batch, semi-continuous or continuous mode. Preferably, they are operated in semi-continuous or continuous mode. To that end, a common reaction media may be provided or circulated in each of the first transparent reactor cell 110 and second reactor cell 120, the common reaction media comprising at least the first starting materials and the second starting materials and optionally the first products and the second products. In this embodiment, the first photocatalyst 210 and the second photocatalyst 220 may be fixed in the first reactor cell 110 and in the second reactor cell 120, respectively.

Alternatively, a first reaction media is provided to the first transparent reactor cell, including at least the first starting materials and optionally the first products. A second reaction media may be provided to the second reactor cell, including at least the second starting materials and optionally the second products. In this embodiment, the first photocatalyst 210 and/or the second photocatalyst 220 may either be fixed in the first reactor cell 110 and in the second reactor cell 120, respectively, or be provided and preferably circulated with the first reaction media and in the second reaction media, respectively.

The common reaction media or the first reaction media and the second reaction media may flow one way from a respective starting material tank to a respective product tank, or may be circulated between one or both of the first reactor cell(s) and the second reactor cell(s), and one or both the first or second tank or the common tank.

### CHEMISTRY

The photo reactor system according to the disclosure is intended to obtain by a light-promoted reduction half-reaction at least one fuel as a reduced product, for example hydrogen (H₂), carbon monoxide (CO), methane (CH₄) or ammonia (NH₃). In addition, the photo-reactor system according to the disclosure is intended to obtain by a light-promoted oxidation half-reaction at least one value-added organic compound as an oxidation product, such as a fine chemical including one or more moieties chosen among an alcohol, an amine, an aldehyde, a ketone, a carboxylic acid, a carboxylate, an alkene an aryl halide, an arene or any combination thereof.

Such a value-added product may be used directly as a dye, a pesticide, a pharmaceutical, a food additive, or may be used as a starting material to obtain such compounds through additional synthetic steps known in the art. Preferably, no water splitting is performed by the photo-reactor system of the present disclosure.

The oxidation product may relate to the product of a C-C, C-N, S-S bond formation or from a X-H bond activation, wherein X is C, N, O and S. Indeed, X-H bonds are ubiquitous among natural or synthetic material and their activation usually requires expensive catalyst and/or harsh conditions. Such activation may be accompanied by a dehydrogenation process, which may thus contribute to the fuel formation.

Both the oxidation and the reduction first or second half-reactions may be obtained within the same reactor cell and by the same redox photocatalyst. Preferably, these reactions are performed in a liquid phase, preferably in water as the only solvent or the main solvent of the reaction media. Limited quantity of a solvent compatible with water may also be added, for example acetonitrile, methanol, ethanol, THF, dimethylformamide, or dimethylsufloxide, for the sake of solubilizing the organic compounds.

The first photocatalyst 210 and the second photocatalyst 220 may catalyse similar or different reactions. For example, the first and second photocatalysts may have the same chemical nature but may be prepared in two different physical forms so as to absorb different wavelength ranges. More preferably, the first photocatalyst 210 and the second photocatalyst 220 differs in chemical nature and catalyse two different redox couples of reactions.

The starting materials introduced in the first transparent reactor cell and/or in the second reactor cell may thus include an oxidant and a reducer that are unable to react one with the other without catalysis and without being exposed to a light source, such as a water solution of one or more organic compounds to be oxidized (i.e. coupled or functionalized), with optional carbon dioxide, carbon monoxide and/or nitrogen dissolved in the solution.

The first and second oxidation reactions may be chosen into one of alcohol oxidation into aldehyde and ketone, formation of C-C and C-O coupled product, dehydrogenative lactonization of dihydric alcohols, dehydrocoupling of thiols to disulfide, methane conversion by nonoxidative coupling of methane to ethane or by aromatization of methane to benzene, dehydrogenation of cyclic hydrocarbons such as cyclohexane to benzene or N-heterocycle, oxidative coupling of imine to imines or imidazoles, and oxidative cross-coupling such as cross-coupling between benzene and cyclohexane, between toluene and acetone or between ethers and benzene, between, cyanomethylation, hydroxylation and amination of cyclic hydrocarbons and cross-coupling between primary alcohols and amines.

The first and second reduction reactions may be basically producing dihydrogen from the protons coming from the first and second oxidation reactions or producing other fuel from these protons such as methane or ammonia.

For example, the first photocatalyst may catalyse a first reduction half-reaction obtaining hydrogen, ammonia or methane and a first oxidation half-reaction oxidizing an alcohol or an amine to an aldehyde, a ketone, a carboxylate or an imine, a nitro compound and/or a carboxylic acid, respectively. The second photocatalyst may catalyse a second reduction reaction of obtaining hydrogen, ammonia or methane and a second oxidation reaction obtaining an arene, an alkene, an alkyne and/or an aryl halide.

The photocatalysts may be non-organic semiconductor catalysts, for example chosen among the photocatalysts of Table 1, wherein NP stands for nanoparticle, MPA stands for mercaptopropionic acid, QD stands for quantum dot, NR stands for nanorod, NS stands for nanosheet, BTF stands for benzotrifluoride, BAD refers to benzaldehyde. MIL101 is a metal-organic framework (MOF) material having a high surface area and porosity. It serves as a support matrix for incorporating other photocatalytic components and provides enhanced stability and reactivity to the composite system. Wavelength ranges are given in nm.

Table 1

| **#** | **Photocatalyst** | **Starting Material (Solvent)** | **Wavelength** |
|---|---|---|---|
| 1 | Ni/CdS NPs | methanol, ethanol, 2-propanol, etc. (CH₃CN) | ≥420 |
| 2 | Ag NPs/g-C₃N₄ | methanol | 350-780 |
| 3 | Sn/TiO₂ | ethanol | 365 |
| 4 | Ni/CdS NPs | methanol | ≥420 |
| 5 | Ag NPs/CdS | ethanol | ≥400 |
| 6 | Rh-doped SrTiO₃ | benzylic alcohols, 2-propanol, 1-pentanol (H₂O) | ≥400 |
| 7 | Au/TiO₂ | 3-phenylpropanol, etc. (ethyl acetate) | 300-470 |
| 8 | Pt/Zn₃In₂S₆ | benzyl alcohol (BTF) | ≥420 |
| 9 | Au-Pt@CdS | benzyl alcohol (BTF) | ≥420 |
| 10 | Ni/CdS/TiO₂@MIL-101 | aromatic alcohols (CH₃CN) | 450-485 |
| 11 | Ni/Zn_{0.5}Cd_{0.5}S | benzyl alcohol | ≥420 |
| 12 | MPA-CdSe QD-Ni²⁺ | primary and secondary alcohols (H₂O) | 410 |
| 13 | ZnS-NiₓS_{y} | benzyl alcohol (H₂O) | ≥200 |
| 14 | CdS-Pt | benzyl alcohol (benzene) | 575 |
| 15 | Pd/CdS-TiO₂ | aromatic alcohols (H₂O) | LED |
| 16 | Pt-g-C₃N₄ | primary aromatic alcohols (H₂O) | ≥400 |
| 17 | Pt-TiO₂ | primary aromatic alcohols (CH₃CN) | 366 |
| 18 | CNx-NiP | 4-methylbenzyl alcohol (phosphate solution) | 350-370 |
| 19 | CdS/TiO₂/MoS₂ | benzyl alcohol (CH₃CN) | ≥420 |
| 20 | Mn_{0.25}Cd_{0.75}S/WO₃ | benzyl alcohol (BTF) | ≥420 |
| 21 | Co/CdS NRs | benzyl alcohol (CH₃CN) | ≥420 |
| 22 | Zn₃In₂S₆ | benzyl alcohol | ≥380 |
| 23 | MPA-CdSe QDs | isopropyl alcohol | 410 |
| 24 | Ru/SrTiO₃:Rh | primary alcohols (toluene/H₃PO₄) | ≥420 |
| 25 | Ni/CdS NSs | aromatic alcohols (CH₃CN/H₂O) | 440-460 |

The oxidation products correspond to the corresponding carbonyl compounds. As visible in Table 1, some reactions do not need any solvent but may use the starting materials as the liquid phase of the reaction media.

The photocatalysts may be further chosen among the photocatalysts of Table 2.

**Table 2**

| **#** | **Photocatalyst** | **Starting material** | **Oxidation Product** | **Wavelength** |
|---|---|---|---|---|
| 26 | MoS₂/CdS | methanol | ethylene glycol | ≥420 |
| 27 | CoP/Zn₂In₂S₅ | methanol, ethanol | ethylene glycol | ≥400 |
| 28 | CdS/Ni₂P | methanol | 2,3-butanediol | ≥420 |
| 29 | Pt/TiO₂ | ethanol | 1,1-dimethoxymethane | 365 |
| 30 | TiO₂ | primary alcohols | acetals | 320-400 |
| 31 | TiO₂ NSs-Pd | ethanol | 1,1-diethoxyethane | ≥300 |
| 32 | TiO₂ | ethanol | 1,1-diethoxyethane | 320-400 |
| 33 | CdS-Ti₃C₂Tₓ | ethanol | 1,1-diethoxyethane | ≥420 |
| 34 | CdS/Ni-MoS₂ | ethanol | 1,1-diethoxyethane | ≥420 |
| 35 | Pt-TiO₂ NTs/NRs | ethanol | 1,1-diethoxyethane | 320-400 |
| 36 | Pt/TiO₂ | isopropanol | pinacol | 320-400 |
| 37 | ZnIn₂S₄ | benzylic alcohols | C-C coupled dimers | 455 |
| 38 | CdS QDs | benzylic alcohol | C-C coupled dimers | 405 |
| 39 | CdS NPs | benzylic alcohols | C-C coupled dimers | 440 |
| 40 | Ni/CdS NPs | benzylic alcohols | C-C coupled dimers | ≥420 |
| 41 | Znln2S4 NSs | benzylic alcohols | C-C coupled dimers | 450 |
| 42 | CdS/SiO₂ | benzylic alcohols | C-C coupled dimers | 500-550 |
| 43 | Pt- CdSe QD/CdS NR | benzylic alcohols | benzaldehydes | 420 or AM 1.5G |

In Table 2, NS stands for nanosheet, NT stands for nanotube, NR stands for nanorod, QD stands for quantum dot, NP stands for nanoparticle. No solvent may be added to the reactions catalyzed by the photocatalysts of Table 2. Alternatively, water may be added to the starting material. Wavelength ranges are provided in nm.

The photocatalysts may be an organic semiconductor, for example a photocatalytic semiconductor polymer. For example, the photocatalysts may be chosen among Polyaniline (PANI), Polythiophene (PTh), Poly(3-hexylthiophene) (P3HT), Poly(phenylene sulfide) (PPS), Poly(phenylene vinylene) (PPV) and Polypyridyl complexes such as poly(2,2'-bipyridine) (P2B) or poly(1-vinylpyrene) (PVP). The wavelength ranges of these photocatalytic polymers are shown in Table 3 below.

**Table 3**

| **Photocatalyst** | **Wavelength (nm)** |
|---|---|
| Polyaniline | 400-800 |
| Polythiophene | 400-700 |
| Poly(3-hexylthiophene) | 500-600 |
| Poly(phenylene sulfide) | 300-500 |
| Poly(phenylene vinylene) | 400-600 |

The above photocatalysts may be doped in order to increase their photocatalytic activities and/or limit the wavelength range of light absorption, for example by the insertion of quantum dots or metallic oxide. For example, a photocatalyst may be palladium/iridium oxide-loaded homopolymer of dibenzo-[b,d]-thiophene sulfone.

Hybrids photocatalysts may be produced by conjugation of a polymer photocatalyst with a non-organic nanomaterial. For example, the photocatalyst may be polyaniline conjugated graphene nanocomposite, polyaniline modified SnS₂ nanosheets, poly(3-hexylthiophene) conjugated to carbo nanotubes or metallic nanoparticles.

The photocatalyst may be produced under different forms in order to obtain absorption in different wavelength ranges. For example, poly(3-hexylthiophene) as a film has a peak absorption in the range of 500-620 nm whereas poly(3-hexylthiophene) as a crystal has a peak absorption of 650-700 nm. Similarly, the non-organic photocatalyst may be produced as zero-dimensional quantum dot, 1-d nano rod/wire, 2-d nano-plates or 3-d sphere or nanotube.

In the case the first photocatalyst and the second photocatalyst differ from one another, the first photocatalyst may be based on SrTiO3 or Cd and Zn-sulfide and the second photocatalyst may be based on In, for example all-inorganic sulfide-capped InP and/or InP/ZnS quantum dots, or alternatively C₃N₄.

Although the present invention has been described and illustrated in detail, it is clearly understood that the same is by way of illustration and example only and is not to be taken by way of limitations, the scope of the present invention being limited only by the terms of the appended claims.

## Claims

1. A photo-reactor system comprising:
- a first transparent reactor cell comprising a first photocatalyst and
- a second reactor cell comprising a second photocatalyst,
the first transparent reactor cell being configured to receive light from a light source and the second reactor cell being configured to receive light from the light source through the first transparent reactor cell,
wherein the second photocatalyst is adapted to absorb light in a second wavelength range differing from a first wavelength range absorbed by the first photocatalyst.

2. The photo-reactor system according to the previous claim, wherein the first transparent reactor cell is located on the second reactor and arranged for directly receiving light from the light source.

3. The photo-reactor system according to claim 1, wherein the second reactor cell is transparent and is embedded in the first transparent reactor cell, preferably coaxially.

4. The photo-reactor system according to any of the previous claims, wherein the first photocatalyst and the second photocatalyst differ one from the other and are chosen among metals, metal alloys and organic semiconductors.

5. The photo-reactor system according to any of the previous claims, wherein the first photocatalysis is adapted to catalyse at least one first reaction and the second photocatalyst is adapted to catalyse at least one second reactions.

6. The photo-reactor system according to any the previous claims, wherein the first photocatalyst is adapted to catalyse the production first products and the second photocatalyst is adapted to catalyse the production of second products.

7. The photo-reactor system according to any of the previous claims, wherein the first photocatalyst and/or the second photocatalyst is a colloidal material suspended in a liquid.

8. The photo-reactor system according to any of the previous claims, including one tank for storing first and second starting materials, first and second products and connected to both the first transparent reactor cell and the second reactor cell.

9. The photo-reactor system according to the previous claim, wherein the second starting materials are the first products.

10. The photo-reactor system according to any of the claims 1 to 7, including a first tank connected to the first reactor cell for storing first starting materials, first products and/or the first photocatalyst and a second tank connected to the second reactor cell for storing second starting materials, second product and/or the second photocatalyst.

11. The photo-reactor system according to any of the previous claims, wherein the second reactor cell is transparent and the photo reactor system comprises a third reactor cell with a third photocatalyst, the third reactor cell being adapted to receive light through the second reactor cell.

12. The photo-reactor system according to the previous claim, wherein the third reactor cell is adapted to absorb light in a third wavelength range different from the first wavelength range and the second wavelength range.

13. A method to obtain organic products with a photo-reactor system comprising a first transparent reactor cell including a first photocatalyst and a second reactor cell including a second photocatalyst, wherein the first photocatalyst is adapted to absorb a first wavelength and the second photocatalysts is adapted to absorb a second wavelength, the method comprising the steps of:
- providing first starting materials in the first transparent reactor cell,
- providing second starting materials in the second reactor cell,
- Illuminating the first transparent reactor cell and the second reactor cell through the first transparent reactor cell.

14. The method according to the previous claim, wherein the steps of providing the first starting materials and the second starting materials are performed continuously, wherein the first starting materials are circulated in the first transparent reactor cell and the second starting materials are circulated in the second reactor cell.

15. The method according to the previous claim, wherein a flow rate of the first starting materials and/or of the second starting materials depends on an amount of light received by the photocatalytic reactor system.
